# EUROPÄISCHE PATENTANMELDUNG

(11) **EP 1 508 779 A1**
(43) Veröffentlichungstag der Anmeldung: **23.02.2005**
(21) Anmeldenummer: 04010395.4
(22) Anmeldetag: 03.05.2004
(51) Int. Cl.: G01C 21/36

(54) **Navigationssystem mit Routenführung**

(30) Priorität: 21.08.2003 DE 10338329
(71) Anmelder: Dr.Ing. h.c.F. Porsche Aktiengesellschaft, 70435 Stuttgart (DE)
(72) Erfinder: Tölle, Winfried, 67433 Neustadt/Weinstrasse (DE)

(57) **Zusammenfassung**

Kartenanzeigevorrichtung für ein Navigationssystem in einem Fahrzeug, wobei die Angabe der Strecke von einem Startpunkt (SP) zu einem Zielpunkt (ZP) unabhängig von der aktuellen Position des Fahrzeuges immer angezeigt wird und wobei die zurückgelegte Strecke sich optisch von der noch zu fahrenden Strecke unterscheidet.

## Beschreibung

Die vorliegende Erfindung betrifft ein Navigationssystem mit einer Kartendarstellung für die zurückzulegende Strecke insbesondere im Geländebetrieb.

Aus der DE 198 35 422 A1 ist bereits eine Kartenanzeigevorrichtung und ein Aufzeichnungsmedium bekannt, bei welcher ein Fahrzeugnavigationssystem eine Streckenführung bereitstellt, die dann angezeigt wird.

Mit der erfindungsgemäßen Kartenanzeigevorrichtung ist es möglich, die Routenführung von einem Punkt A zu einem Punkt B, insbesondere im Gelände, dem Fahrer noch deutlicher anzuzeigen und ihm etwaige Abweichungen vom Streckenverlauf zu kennzeichnen.

So ist es vorteilhaft, dass die beim Start berechnete Strecke mit ihrem Streckenverlauf während der gesamten Fahrt in der Karte eingezeichnet bleibt und lediglich ihre Farbe verändert, wenn der Streckenabschnitt passiert ist. Ebenso bleibt bei einer Abweichung von der einmal vorgegebenen Strecke, beispielsweise aufgrund von Hindernissen, der ursprüngliche Streckenverlauf in der Karte erhalten und die Abweichung wird beispielsweise mit einer anderen Farbe in der Karte deutlich gemacht. Gleichzeitig wird von dieser Abweichung ausgehend die optimale Strecke für die Rückführung auf die ursprünglich berechnete Strecke bestimmt und in der Karte eingezeichnet Bei der Bestimmung der optimalen Strecke für die Rückführung auf die ursprünglich berechnete Strecke werden die eigene Fahrtrichtung, die Fahrtrichtung entlang der ursprünglich berechneten Strecke und beispielsweise etwaige Hindernisse berücksichtigt. Damit ist die optimale Strecke für die Rückführung nicht zwangsläufig die kürzeste Strecke zurück. Denkbar ist hier Möglichkeit, dem Fahrzeugführer verschieden Varianten für eine Auswahl anzubieten.

Damit ist es dem Fahrer möglich, sich sehr einfach und schnell in seiner Kartenanzeigevorrichtung zu orientieren und seine momentane tatsächliche Position abzulesen.

Eine erfindungsgemäße Kartenanzeigevorrichtung ist in der Zeichnung dargestellt und in der nachfolgenden Beschreibung näher erläutert.

Es zeigen
- Fig. 1: eine Karte mit Routenverlauf, wobei der zurückliegende Routenverlauf bis zum Startpunkt mit einer anderen Farbe als der vorausliegende Routenverlauf markiert ist,
- Fig. 2: eine Route, die sich aus einer Aneinanderreihung von mindestens einem Einzelziel ergibt und bei welcher der Routenverlauf als gerichteter Pfeil eingezeichnet ist.

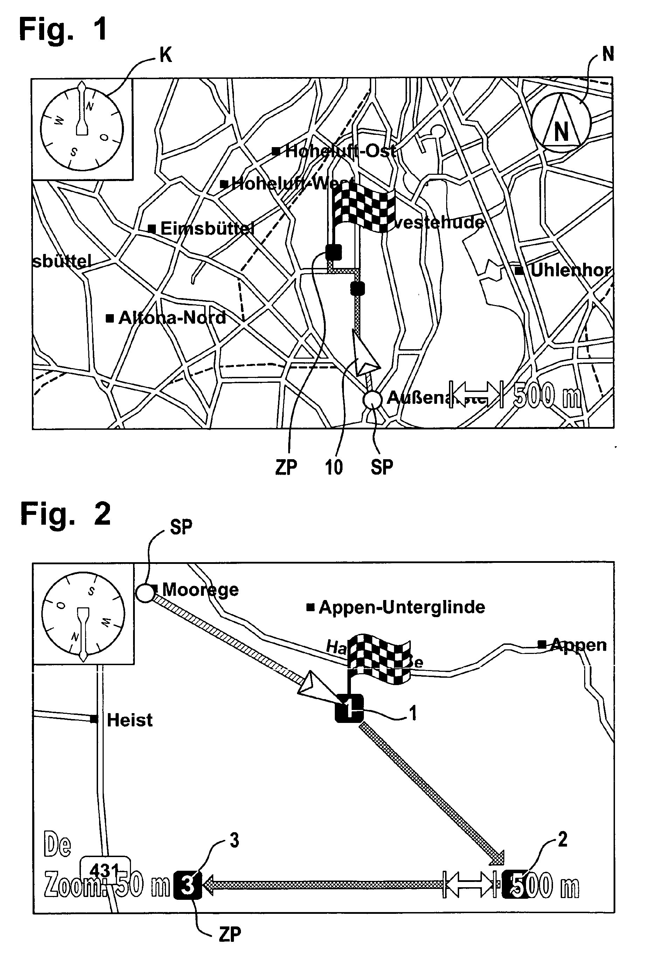

In der Fig. 1 ist eine Karte dargestellt, die im linken oberen Eck einen Kompass zeigt und im rechten oberen Eck einen Nordpfeil angibt, wobei der Kompass mit dem Bezugszeichen K und der Nordpfeil mit dem Bezugszeichen N versehen ist. Der Streckenverlauf ist in dieser Karte in Fig. 1 von einem Startpunkt SP bis zum Zielpunkt ZP, welcher in der Fig. 1 mit einer Zielflagge gekennzeichnet ist, angegeben. Die aktuelle Position ist in der Fig. 1 mit einem Dreieckssymbol eingegeben, welches das Bezugszeichen 10 hat. Die Spitze dieses Dreieckssymbols 10 zeigt dem Fahrer seine augenblickliche Bewegungsrichtung an. Die Karte hat zusätzlich einen Hinweis auf die aktuelle Größendarstellung. Die in der Fig. 1 gezeichnete zu fahrende Wegstrecke von dem Startpunkt SP zum Zielpunkt ZP ist markiert und es erfolgt eine unterschiedliche Darstellung der Strecke, die bereits gefahren wurde zur Strecke, die noch zu fahren ist. Im vorliegenden Beispiel ist die Strecke, die noch zu fahren ist, schraffiert angegeben. Denkbar ist auch eine farbliche Umschaltung, wobei beispielsweise die gefahrene Strecke in einem Grauton und die noch zu fahrende Strecke in einem Rotton angegeben werden kann.

Fig. 2 zeigt ebenfalls eine Kartendarstellung mit einer eingezeichneten Fahrroute von einem Startpunkt SP zu einem Zielpunkt ZP, wobei hier gleiche Bezugszeichen verwendet werden, wie sie für gleiche Angaben in Fig. 1 gewählt wurden. In dieser Darstellung ist die zurückzulegende Wegstrecke in einzelne Wegabschnitte aufgeteilt, wobei jeder Wegabschnitt mit einem Einzelziel beendet wird. Zur besseren Darstellung sind diese Einzelziele in der vorliegenden Karte entsprechend ihrer Reihenfolge (1, 2, 3) nummeriert.

Diese neue erfindungsgemäße Kartendarstellung ermöglicht das Entlangführen eines Fahrzeuges an einer vorgegebenen Strecke anhand von Wegpunkten und Streckenaufzeichnung oder Streckenvorgaben, ohne dass eine aktuelle Karte hinterlegt sein muss.

Beim Rückführen des Fahrzeuges nach einer Streckenabweichung auf die ursprünglich berechnete Strecke kann der Fahrer unter verschiedenen Optionen wählen. So kann zum einen die kürzeste Strecke für die Rückführung, die Strecke mit der kürzesten Fahrtzeit zum Endziel oder beispielsweise die Strecke zurück zum Abweichungspunkt als Möglichkeit angegeben werden.

## Patentansprüche

1. Kartenanzeigevorrichtung für ein Navigationssystem in einem Fahrzeug, wobei die Angabe der Strecke von einem Startpunkt (SP) zu einem Zielpunkt (ZP) unabhängig von der aktuellen Position des Fahrzeuges immer angezeigt wird und wobei die zurückgelegte Strecke sich optisch von der noch zu fahrenden Strecke unterscheidet.

2. Kartenanzeigevorrichtung nach Anspruch 1, **dadurch gekennzeichnet, dass** die Strecke zwischen Startpunkt und Zielpunkt als eine Aneinanderreihung von mindestens einem Einzelziel dargestellt ist und wobei der Routenverlauf als gerichteter Pfeil eingezeichnet ist.

3. Kartenanzeigevorrichtung nach Anspruch 1, **dadurch gekennzeichnet, dass** bei einer Abweichung der aktuellen Position von der vorgegebenen Fahrtstrecke die ursprünglich berechnete Fahrtstrecke im Navigationssystem weiterhin angezeigt wird und das Navigationssystem vom aktuellen Standpunkt aus die optimale Strecke zurück auf die ursprünglich berechnete Fahrstrecke berechnet.

4. Kartenanzeigevorrichtung nach einem der vorherigen Ansprüche, **dadurch gekennzeichnet, dass** die Anzeige der Fahrstrecke ohne Kartendaten zur Navigation erfolgt.
